# FASCICULE DE BREVET EUROPEEN

(11) **EP 0 678 170 B1**
(45) Date de publication et mention de la délivrance du brevet: **29.07.1998**
(21) Numéro de dépôt: 95900812.9
(22) Date de dépôt: 08.11.1994
(51) Int. Cl.: F16D 13/58, F16D 13/71

(54) **MODULE D'EMBRAYAGE A SERRAGE ELASTIQUE DU DIAPHRAGME, ET MECANISME CORRESPONDANT**
KUPPLUNGSEINHEIT MIT FERDERNDER EINSPANNUNG DER TELLERFEDER UND DAFÜR BESTIMMTE VORRICHTUNG
CLUTCH MODULE WITH RESILIENT DIAPHRAGM CLAMPING MEANS AND ASSOCIATED MECHANISM

(30) Priorité: 09.11.1993 FR 9313337
(43) Date de publication de la demande: 25.10.1995
(73) Titulaire: VALEO, 75017 Paris (FR)
(72) Inventeur: VILLATA, Gino, I-14021 Buttigliera D'Asti (IT)
(74) Mandataire: Gamonal, Didier
(86) Numéro de dépôt international: FR9401301
(87) Numéro de publication internationale: WO9513482

(56) Documents cités:
- DE-A- 2 927 424
- FR-A- 1 398 339
- FR-A- 2 546 999
- GB-A- 1 187 365
- US-A- 5 236 070

## Description

L'invention concerne les modules d'embrayage, notamment pour véhicules automobiles.

Ainsi qu'on le sait, un module d'embrayage comporte, de manière unitaire, un mécanisme, une friction d'embrayage et un volant, le mécanisme étant lui-même formé d'un couvercle, par lequel il est rapporté sur le volant, d'un diaphragme, qui prend appui sur le couvercle, et d'un plateau de pression, sur lequel porte le diaphragme, avec, intervenant entre le plateau de pression et le couvercle, des languettes qui solidarisent en rotation ce plateau de pression au couvercle tout en lui laissant une certaine mobilité axiale par rapport à celui-ci.

L'invention vise plus particulièrement le cas où sont par ailleurs associés au diaphragme des moyens de serrage élastiques qui sollicitent en permanence ce diaphragme en direction de son appui primaire sur le couvercle.

Le plus souvent, ces moyens de serrage élastiques sont simplement constitués par une rondelle élastique prenant appui sur des pattes qui, issues du couvercle, contournent le diaphragme à la faveur des perçages existant à la racine de ses doigts radiaux.

Du fait même des pattes ainsi à former et plier, la réalisation nécessite un outillage particulier.

Dans le document DE-A-29 27 424, conforme au préambule de la revendication 1 les moyens de serrage élastiques sont constitués par une pièce annulaire qui, prenant appui sur le couvercle à sa périphérie de plus grand diamètre, porte sur le diaphragme au voisinage de sa périphérie de plus petit diamètre.

Pour l'appui, et la fixation, de cette pièce annulaire sur le couvercles il est nécessaire de procéder à une découpe, et au formage, d'une partie au moins de la paroi latérale de celui-ci, au prix, donc, d'une complication de la réalisation.

Dans le document FR-A-2 546 996 le diaphragme ne porte pas sur le plateau de pression mais sur une pièce distincte du plateau de pression et rapportée sur celui-ci. Cette pièce est annulaire et constitue par elle-même les languettes. A la figure 9 de ce document, des moyens de serrage élastique comportent de manière précitée une rondelle élastique et des pattes.

D'une manière générale dans ce document il est prévu des pattes en sorte que la réalisation nécessite un outillage particulier.

En outre le plateau de pression n'est pas du type standard puisque le diaphragme ne porte pas directement sur celui-ci.

L'invention a pour objet un module d'embrayage du genre, à languettes entre le plateau de pression et le couvercle et à moyens de serrage élastiques associés au diaphragme, exposé ci-dessus et relevant avantageusement d'une grande simplicité de réalisation.

Ce module d'embrayage est caractérisé en ce que les moyens de serrage élastiques du diaphragme sont fractionnés en au moins deux secteurs, qui, à chacune de leurs extrémités circonférentielles, sont solidaires du couvercle, tant circonférentiellement qu'axialement, et dont chacun forme d'un seul tenant une languette.

Il est ainsi avantageusement tiré un parti supplémentaire des pièces constituant les moyens de serrage élastiques du diaphragme, au bénéfice d'une simplification de la réalisation, tant à la fabrication qu'au montage.

Par exemple, pour leur solidarisation au couvercle, les secteurs constituant ces pièces sont pincés entre ce couvercle et le volant, conjointement avec un centrage et/ou une solidarisation en rotation.

Il en résulte une grande simplicité de réalisation, tant à la fabrication, aucune découpe de la paroi latérale du couvercle n'étant nécessaire, qu'au montage, ce montage se satisfaisant en effet dans ce cas d'un simple empilage.

Si, en variante, des moyens de solidarisation spécifiques interviennent entre le couvercle et les secteurs, le mécanisme peut avantageusement former par lui-même si désiré un sous-ensemble unitaire, ce qui facilite également le montage.

La présente invention a encore pour objet un tel mécanisme.

Les objets de l'invention et leurs caractéristiques et avantages ressortiront d'ailleurs de la description qui va suivre, à titre d'exemple, en référence aux dessins schématiques annexés sur lesquels :
- la figure 1 est, avec des arrachements locaux, une vue en élévation d'un module d'embrayage suivant l'invention ;
- la figure 2 en est une vue en coupe axiale, suivant la ligne brisée II-II de la figure 1, avec, en traits fins, sur cette figure 2, les autres composants avec lesquels il coopère
- la figure 3 en est, supposée développée à plat, une vue partielle en coupe circonférentielle, suivant la ligne III-III de la figure 1 ;
- la figure 4 est, à échelle supérieure, une vue en perspective d'un des secteurs mis en oeuvre, suivant l'invention, dans ce module d'embrayage ;
les figures 5, 6 et 7 sont des vues partielles en coupe de ce secteur, suivant, chacune respectivement, les lignes V-V, VI-VI et VII-VII de la figure 4 ;
- la figure 8 est une vue partielle en coupe axiale qui, analogue à celle de la figure 2, se rapporte à une variante de réalisation ;
- la figure 9 est une vue partielle en coupe circonférentielle analogue à celle de la figure 3 pour cette variante de réalisation ;
- la figure 10 est une vue partielle en coupe circonférentielle analogue à celle de la figure 3 pour une autre variante de réalisation.

Tel qu'illustré sur ces figures, le module d'embrayage 10 suivant l'invention comporte, successivement axialement, de manière connue en soi, un mécanisme 11, une friction d'embrayage 12, et un volant 13.

Le mécanisme 11 comporte, lui-même, successivement axialement, un couvercle 14, ici en tôle emboutie, qui, tel que décrit ultérieurement, est assujetti au volant 13, un diaphragme 15, qui prend appui sur le couvercle 14, et un plateau de pression 16, sur lequel porte le diaphragme 15.

Ici, le mécanisme 11 est de type "poussé".

Le diaphragme 15 prend donc appui sur le couvercle 14 du côté de la périphérie de plus petit diamètre de sa partie périphérique 18 formant rondelle Belleville, cependant qu'il porte sur le plateau de pression 16 du côté de la périphérie de plus grand diamètre de celle-ci.

Sous la sollicitation du diaphragme 15, le plateau de pression 16 est apte à serrer contre le volant 13, formant plateau de réaction, les garnitures de frottement 20 du disque de friction 19 que comporte la friction d'embrayage 12.

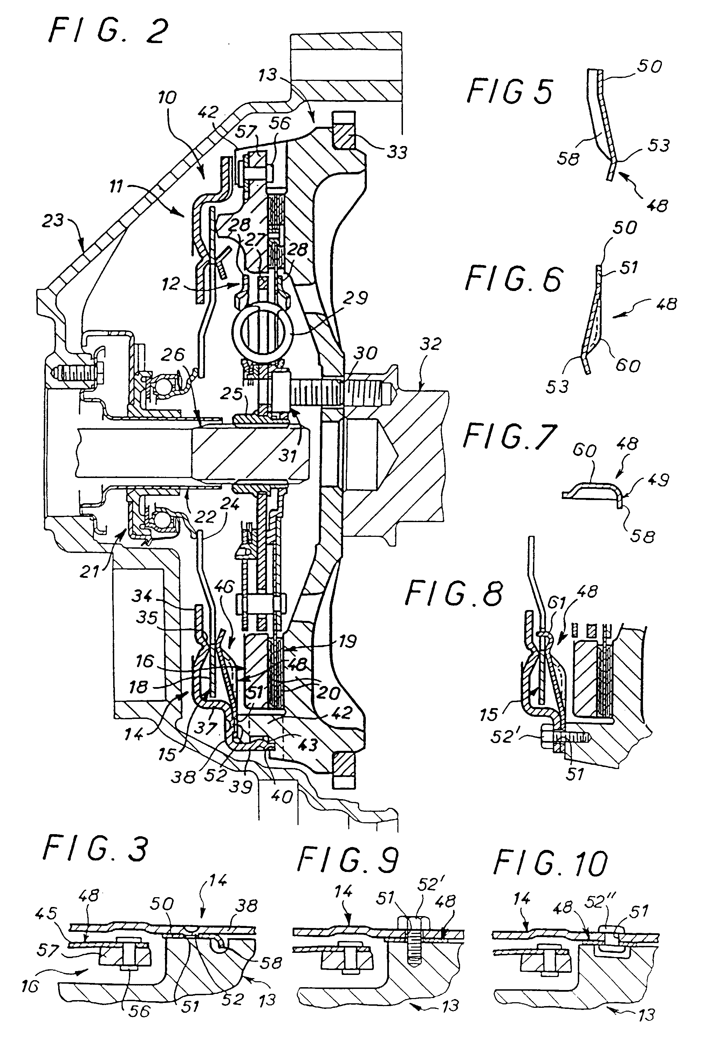

Pour le desserrage de ces garnitures de frottement 20, il est prévu, tel que représenté en traits fins sur la figure 2, une butée de débrayage 21, qui, montée coulissante axialement sur un manchon 22 solidaire du carter 23 de l'ensemble, est apte à agir en poussée sur les doigts 24 que forme la partie centrale du diaphragme 15.

Ici, la friction d'embrayage 12 est à moyeu amortisseur.

Outre un moyeu 25, par lequel elle est adaptée à être calée en rotation sur un arbre mené 26, en l'espèce l'arbre de sortie d'une boîte de vitesses, et un voile de moyeu 27, qui est solidaire, ici par sertissage, du moyeu 25, elle comporte deux rondelles de guidage 28, qui s'étendent chacune respectivement de part et d'autre du voile de moyeu 27, et dont est solidaire le disque de friction 19, avec, interposés circonférentiellement entre le voile de moyeu 27 et ces rondelles de guidage 28, des moyens élastiques à action circonférentielle, ici des ressorts 29 du type ressort à boudin, dont chacun est individuellement logé pour partie dans une fenêtre du voile de moyeu 27 et pour partie dans des fenêtres des rondelles de guidage 28.

Le disque de friction 19 est accolé à l'une des rondelles de guidage 28 en étant solidarisé à celle-ci par des colonnettes qui solidarisent à l'autre cette rondelle de guidage 28.

Ici, le volant 13 est d'un seul tenant en étant en matière moulable, comme le plateau de pression 16, ici en fonte.

Dans sa partie centrale, il comporte plusieurs perçages 30, répartis circulairement, pour le passage de vis de fixation 31 propres à permettre de rapporter l'ensemble sur un arbre menant 32, en l'espèce le vilebrequin d'un moteur à combustion interne. A sa périphérie, il porte une couronne de démarreur 33.

Ici, le couvercle 14 du mécanisme 11 comporte, transversalement, un fond 34, qui, s'étendant annulairement, forme ici par emboutissage un cordon 35 par lequel il fournit un appui primaire à la partie périphérique 18 formant rondelle Belleville du diaphragme 15.

Le couvercle 14 comporte, en outre, périphériquement, une paroi latérale 37, par laquelle il contourne le diaphragme 15, et qui est ici globalement cylindrique, avec, en section transversale, un contour circulaire.

Le couvercle 14 comporte, ensuite, transversalement, un rebord 38, qui s'étend radialement en direction opposée au fond 34, et par lequel il prend axialement appui sur le volant 13.

Ici, le couvercle 14 comporte, enfin, réparties circulairement, pour son assujettissement au volant 13, des pattes 39, qui, issues de la périphérie de plus grand diamètre de son rebord 38, s'étendent globalement axialement, et qui, pour éviter leur centrifugation en service, sont chacune respectivement en prise par leur tranche avec des gorges de retenue 40 prévues à cet effet circulairement sur le volant 13 au voisinage de la périphérie de plus grand diamètre de celui-ci.

Ici, trois pattes 39 sont prévues sur le couvercle 14, et, suivant une même circonférence, un nombre égal de gorges de retenue 40 sur le volant 13.

Ici, le volant 13 présente, axialement en saillie en direction du couvercle 14, en bordure de ses gorges de retenue 40, des bossages 42, qui, à raison d'un par gorge de retenue 40, sont allongés circulairement, en s'assimilant globalement à une couronne localement interrompue de place en place pour des raisons qui apparaîtront ultérieurement, et auxquels sont adossées les pattes 39 du couvercle 14.

C'est sur ces bossages 42, arasés transversalement à un même niveau, que le couvercle 14 prend appui axialement par son rebord 38.

Ici, les bossages 42 du volant 13 présentent chacun en creux sur leur surface latérale externe une gorge de sertissage 43 dans laquelle, ici, mais cela n'est pas impératif, les pattes 39 du couvercle 14 sont de place en place refoulées par emboutissage pour assurer ou parfaire la solidarisation axiale de ce couvercle 14 au volant 13.

Pour le blocage en rotation du couvercle 14 sur le volant 13, il est prévu, ici, des languettes 44, qui, issues du rebord 38 du couvercle 14, et donc métalliques, de part et d'autre de chacune de ses pattes 39, sont repliées en équerre au contact des extrémités circonférentielles des bossages 42 du volant 13.

Entre le plateau de pression 16 et le couvercle 14 interviennent, de place en place, tel que décrit ultérieurement, des languettes 45, qui, disposées globalement transversalement par rapport à l'axe de l'ensemble, en étant réparties circulairement autour de celui-ci, sont élastiquement déformables axialement et solidarisent en rotation le plateau de pression 16 au couvercle 14 tout en lui laissant une certaine mobilité axiale par rapport à celui-ci, et, conjointement, sont associés au diaphragme 15 des moyens de serrage élastiques 46, qui sollicitent en permanence ce diaphragme 15 en direction de son appui sur le couvercle 14 en portant sur ce diaphragme 15 du côté de celui-ci opposé au cordon 35 du couvercle 14.

Suivant l'invention, ces moyens de serrage élastiques 46 sont fractionnés en au moins deux secteurs 48 qui, à chacune de leurs extrémités circonférentielles, sont solidaires du couvercle 14, tant circonférentiellement qu'axialement, et dont chacun forme d'un seul tenant une languette 45.

Ici, le module d'embrayage 10 comporte, régulièrement répartis circulairement, trois secteurs 48, et ceux-ci sont métalliques.

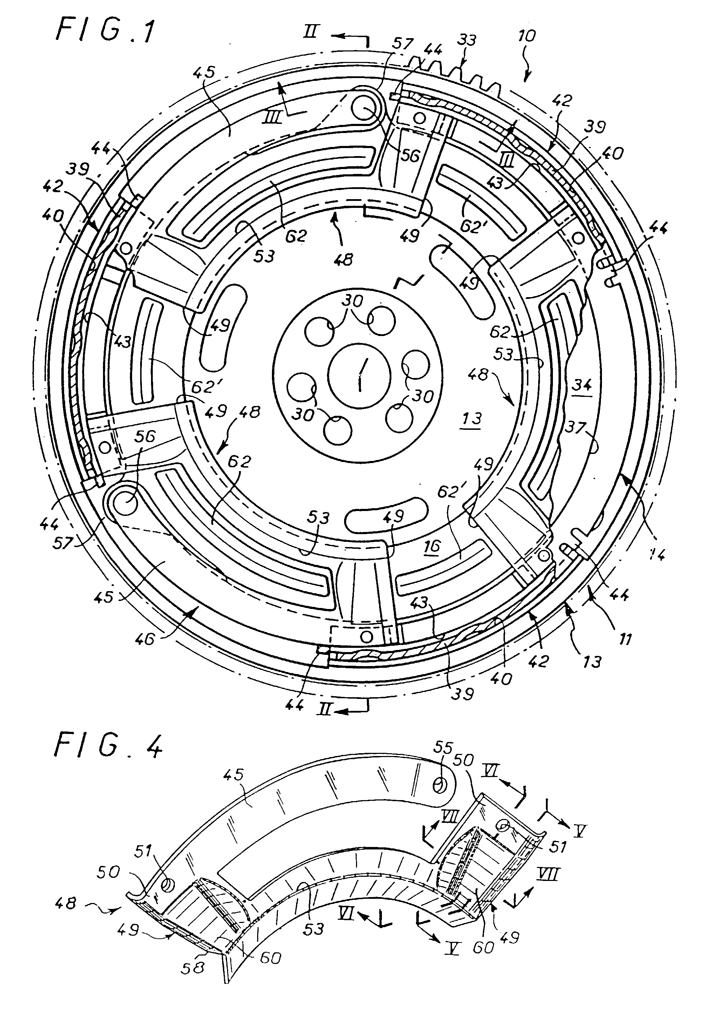

Ici, ces secteurs 48 présentent, à chacune de leurs extrémités circonférentielles, un épanouissement 49, qui s'étend globalement radialement, en direction opposée à l'axe de l'ensemble, et par lequel, sur les figures 1 à 9, ils sont pincés entre le couvercle 14 et le volant 13.

C'est donc par l'intermédiaire des secteurs 48 que le couvercle 14 prend appui axialement sur le volant 13, et, plus précisément, sur les bossages 42 d'orientation axiale, de ce volant 13.

Ici, figures 4 et 5, les secteurs 48 présentent, à chacune de leurs extrémités circonférentielles, sur une portion plate 50 de leur épanouissement 49 correspondant, et au voisinage de leur bord périphérique radialement le plus externe, un perçage 51 dans lequel est engagé un organe de centrage et/ou de solidarisation en rotation par rapport au couvercle 14.

Sur les figures 1 à 7, il s'agit d'un pion 52 de contour complémentaire venu d'un seul tenant du rebord 38 du couvercle 14.

Les secteurs 48 se trouvent ainsi attelés circonférentiellement au couvercle 14, cependant que, par leur pincement entre ce couvercle 14 et le volant 13, ils lui sont conjointement attelés axialement.

Au voisinage de leur bord périphérique radialement le plus interne, les secteurs 48 présentent, circulairement, par emboutissage, pour fournir un appui secondaire au diaphragme 15, en correspondance avec le cordon 35 du couvercle 14, une arête 53, qui, préférentiellement, est arrondie en conséquence.

La languette 45 que forment chacun individuellement les secteurs 48 est issue d'un seul tenant en porte à faux d'un de leurs épanouissements 49, en continuité avec la portion plate 50 de celui-ci.

Ici, cette languette 45 s'étend en arc de cercle, sur une grande longueur.

A son extrémité libre, elle présente un perçage 55 pour sa fixation à l'aide d'un rivet 56 à l'une des pattes 57 que présente radialement à cet effet à sa périphérie le plateau de pression 16.

Les pattes 57 du plateau de pression 16 s'étendent radialement entre les bossages 42 du volant 13.

Ici, à l'une au moins de leurs extrémités circonférentielles, et, ici, à chacune de celles-ci, les secteurs 48 présentent, pour leur rigidification, le long d lune partie au moins de la longueur de leurs bords radiaux, un bord tombé 58, qui, cependant, n'est pas indispensable.

Pour leur rigidification, également, les secteurs 48 présentent, préférentiellement, à l'une au moins de leurs extrémités circonférentielles, au moins un embouti 60.

Ici, ils présentent, à chacune de leurs extrémités circonférentielles, un embouti 60 unique, qui affecte globalement la totalité de leur épanouissement 49 correspondant, entre la portion plate 50 de celui-ci et l'arête 53.

Ici, cet embouti 60 fait saillie en direction du plateau de pression 16.

Grâce à de tels emboutis 60, et en coopération, éventuellement, avec les bords tombés 58, l'épaisseur des secteurs 48 peut avantageusement être réduite, ce qui est favorable à une bonne élasticité pour les languettes 45 qu'ils forment.

Chacun des secteurs 48 ainsi constitués résulte par exemple de la découpe et de l'emboutissage d'un quelconque flan métallique.

Pour l'appui du diaphragme 15, le plateau de pression 16 présente, en saillie, des bossages 62, 62', qui, tous allongés circulairement suivant une même circonférence, sont alternativement longs et courts.

Ici, les secteurs 48 s'insèrent chacun entre un bossage 62 long et un bossage 62' court par chacun de leurs épanouissements 49, et, par la languette 45 qu'ils forment, ils contournent chacun en U un bossage 62 long.

Dans la variante de réalisation représentée sur les figures 8 et 9, l'un au moins des secteurs 48, et, en pratique chacun de ceux-ci, présente radialement en saillie le long de leur bord périphérique radialement le plus interne, au moins une languette 61, qui, repliée en forme de crosse en direction du diaphragme 15, est engagée dans l'un des passages que comporte celui-ci à la racine de ses doigts radiaux, pour le centrage et/ou le blocage en rotation de ce diaphragme 15.

Dans cette variante de réalisation, le couvercle 14 est rapporté sur le volant 13 par des vis 52' qui, traversant les secteurs 48 à la faveur de leurs perçages 51, assurent conjointement le centrage et le blocage en rotation de ces derniers, au lieu et place des pions 52 précédents.

Dans la variante de réalisation représentée sur la figure 10, les secteurs 48 sont fixés au couvercle 14 par des moyens de solidarisation spécifiques 52", tels que des rivets par exemple, tel que représenté, à la faveur de leurs perçages 51.

Le couvercle 14, le diaphragme 15 et les secteurs 48 forment alors avantageusement un sous-ensemble unitaire. Il en est de même pour le mécanisme 11 si, conjointement, le plateau de pression 16 est dûment fixé par des rivets 56 aux languettes 45 appartenant aux secteurs 48.

Bien entendu, la présente invention ne se limite pas aux formes de réalisation décrites et représentées, mais englobe toute variante d'exécution et/ou de combinaison de leurs divers éléments, notamment en ce qui concerne les moyens d'assemblage assurant l'assujettissement du couvercle au volant.

En outre, au lieu d'être d'un seul tenant, le volant pourrait être en deux parties.

On appréciera que la disposition selon l'invention n'est pas encombrant radialement et que le carter 23 peut venir au plus près (figure 2) des bossages périphériques 42 du volant 13 aisément obtenu par moulage.

## Revendications

1. Module d'embrayage du genre comportant un mécanisme (11), une friction d'embrayage (12) et un volant (13), ledit mécanisme (11) comportant lui-même un couvercle (14) , par lequel il est rapporté sur le volant (13), un diaphragme (15), qui prend appui sur le couvercle (14), et un plateau de pression (16), sur lequel porte le diaphragme (15) , avec, intervenant entre le plateau de pression (16) et le couvercle (14), des languettes (45), qui solidarisent en rotation le plateau de pression (16) au couvercle (14) tout en lui laissant une certaine mobilité axiale par rapport à celui-ci, et, associés au diaphragme (15), des moyens de serrage élastiques (46), qui sollicitent en permanence ce diaphragme (15) en direction de son appui sur le couvercle (14), caractérisé en ce que les moyens de serrage élastiques (46) sont fractionnés en au moins deux secteurs (48), qui, à chacune de leurs extrémités circonférentielles, sont solidaires du couvercle (14), tant circonférentiellement qu'axialement, et dont chacun forme d'un seul tenant une languette (45).

2. Module d'embrayage suivant la revendication 1, caractérisé en ce que, à chacune de leurs extrémités circonférentielles, les secteurs (48) sont pincés entre le couvercle (14) et le volant (13).

3. Module d'embrayage suivant la revendication 2, caractérisé en ce que, le couvercle (14) présentant transversalement un rebord (38) pour son appui axial sur le volant (13), les secteurs (48) présentent, à chacune de leurs extrémités circonférentielles, au voisinage de leur bord périphérique radialement le plus externe, un perçage (51) dans lequel est engagé un organe de centrage et/ou de solidarisation en rotation tel que pion (52) de contour complémentaire venu d'un seul tenant dudit rebord (38), vis (52') ou rivet (52").

4. Module d'embrayage suivant l'une quelconque des revendications précédentes, caractérisé en ce que, à l'une au moins de leurs extrémités circonférentielles, les secteurs (48) présentent, le long d'une partie au moins de la longueur de leurs bords radiaux, un bord tombé (58).

5. Module d'embrayage suivant l'une quelconque des revendications précédentes, caractérisé en ce que, au voisinage de leur bord périphérique radialement le plus interne, les secteurs (48) présentent, circulairement, pour contact avec le diaphragme (15), une arête (53).

6. Module d'embrayage suivant l'une quelconque des revendications précédentes, caractérisé en ce que, à l'une au moins de leurs extrémités circonférentielles, les secteurs (48) présentent au moins un embouti (60).

7. Module d'embrayage suivant l'une quelconque des revendications précédentes, caractérisé en ce que, à chacune de leurs extrémités circonférentielles, les secteurs (48) présentent un épanouissement (49), qui s'étend globalement radialement, et la languette (45) qu'ils forment est issue d'un seul tenant en porte à faux d'un tel épanouissement (49).

8. Module d'embrayage suivant l'une quelconque des revendications précédentes, caractérisé en ce que, le long de son bord périphérique radialement le plus interne, l'un au moins des secteurs (48) présente en saillie une languette (61) pour le centrage et /ou le blocage en rotation du diaphragme (15).

9. Module d'embrayage suivant l'une quelconque des revendications précédentes, caractérisé en ce que la languette (45) que forme chacun des secteurs (48) s'étend en arc de cercle.

10. Module d'embrayage suivant l'une quelconque des revendications précédentes, caractérisé en ce que, le plateau de pression (16) comportant en saillie des bossages (62, 62') pour l'appui du diaphragme (15), chacun des secteurs (48) contourne en U l'un de ces bossages (62, 62').

11. Module d'embrayage suivant l'une quelconque des revendications précédentes, caractérisé en ce qu'il comporte, répartis circulairement, au moins trois secteurs (48).

12. Module d'embrayage suivants l'une quelconque des revendications précédentes, caractérisé en ce que, des moyens de solidarisation spécifiques (52") fixant au couvercle (14) les secteurs (48), le couvercle (14), le diaphragme (15) et les secteurs (48) forment un sous-ensemble unitaire.

13. Module d'embrayage suivant la revendication 12, caractérisé en ce que, le plateau de pression (16) étant fixé aux languettes (45), le mécanisme (11) forme un sous-ensemble unitaire.

## Patentansprüche

1. Kupplungseinheit, umfassend einen Mechanismus (11), eine Reibungskupplungsscheibe (12) und ein Schwungrad (13), wobei der besagte Mechanismus (11) selbst einen Deckel (14), durch den er am Schwungrad (13) angebracht ist, eine Membranfeder (15), die auf dem Deckel (14) zur Auflage kommt, und eine Druckplatte (16) umfaßt, auf der die Membranfeder (15) anliegt, wobei zwischen der Druckplatte (16) und dem Deckel (14) Zungen (45) wirksam sind, die die Druckplatte (16) drehfest mit dem Deckel (14) verbinden, wobei sie ihr eine gewisse axiale Beweglichkeit im Verhältnis zu diesem belassen, und, in Verbindung mit der Membranfeder (15), elastische Einspannmittel (46), die diese Membranfeder (15) ständig in Richtung ihrer Auflage auf dem Deckel (14) beaufschlagen, **dadurch gekennzeichnet**, daß die elastischen Einspannmittel (46) in mindestens zwei Sektoren (48) unterteilt sind, die an jedem ihrer Umfangsenden sowohl umfangsmäßig als auch axial fest mit dem Deckel (14) verbunden sind und die jeweils einstückig eine Zunge (45) bilden.

2. Kupplungseinheit nach Anspruch 1 , **dadurch gekennzeichnet**, daß die Sektoren (48) an jedem ihrer Umfangsenden zwischen dem Deckel (14) und dem Schwungrad (13) eingeklemmt sind.

3. Kupplungseinheit nach Anspruch 2 , **dadurch gekennzeichnet**, daß, während der Deckel (14) in Querrichtung eine Randleiste (38) für seine axiale Auflage am Schwungrad (13) aufweist, die Sektoren (48) an jedem ihrer Umfangsenden in der Nähe ihrer radial am weitesten außen liegenden Umfangskante eine Bohrung (51) aufweisen, in die ein Organ für die Zentrierung und/oder drehfeste Verbindung, wie etwa ein Stift (52) mit formschlüssigem Umriß, der einstückig mit der besagten Randleiste (38) ausgeführt ist, eine Schraube (52') oder ein Niet (52") eingesetzt ist.

4. Kupplungseinheit nach einem der vorangehenden Ansprüche, **dadurch gekennzeichnet,** daß die Sektoren (48) an mindestens einem ihrer Umfangsenden, zumindest entlang einem Teil der Länge ihrer radialen Kanten, einen Bördel (58) aufweisen.

5. Kupplungseinheit nach einem der vorangehenden Ansprüche, **dadurch gekennzeichnet,** daß die Sektoren (48) in der Nähe ihrer radial am weitesten innen liegenden Umfangskante kreisförmig, für den Kontakt mit der Membranfeder (15), eine Kante (53) aufweisen.

6. Kupplungseinheit nach einem der vorangehenden Ansprüche, **dadurch gekennzeichnet,** daß die Sektoren (48) an mindestens einem ihrer Umfangsenden mindestens eine Vertiefung (60) aufweisen.

7. Kupplungseinheit nach einem der vorangehenden Ansprüche, **dadurch gekennzeichnet,** daß die Sektoren (48) an jedem ihrer Umfangsenden einen Fortsatz (49) aufweisen, der sich ingesamt radial erstreckt, wobei die durch sie gebildete Zunge (45) einstückig auskragend aus einem solchen Fortsatz (49) herausgearbeitet ist.

8. Kupplungseinheit nach einem der vorangehenden Ansprüche, **dadurch gekennzeichnet,** daß mindestens einer der Sektoren (48) entlang seiner am weitesten innen liegenden Umfangskante vorstehend eine Zunge (61) für die Zentrierung und/oder Drehsicherung der Membranfeder (15) aufweist.

9. Kupplungseinheit nach einem der vorangehenden Ansprüche, **dadurch gekennzeichnet,** daß sich die Zunge (45), die durch jeden der Sektoren (48) gebildet wird, kreisbogenförmig erstreckt.

10. Kupplungseinheit nach einem der vorangehenden Ansprüche, **dadurch gekennzeichnet,** daß, während die Druckplatte (16) vorstehende Vorsprünge (62, 62') für die Auflage der Membranfeder (15) umfaßt, jeder der Sektoren (48) einen dieser Vorsprünge (62, 62') U-förmig umgibt.

11. Kupplungseinheit nach einem der vorangehenden Ansprüche, **dadurch gekennzeichnet,** daß sie in kreisförmiger Verteilung mindestens drei Sektoren (48) umfaßt.

12. Kupplungseinheit nach einem der vorangehenden Ansprüche, **dadurch gekennzeichnet,** daß, während spezifische Verbindungsmittel (52") die Sektoren (48) am Deckel (14) befestigen, der Deckel (14), die Membranfeder (15) und die Sektoren (48) eine einheitliche Untergruppe bilden.

13. Kupplungseinheit nach Anspruch 12 , **dadurch gekennzeichnet,** daß, während die Druckplatte (16) an den Zungen (45) befestigt ist, der Mechanismus (11) eine einheitliche Untergruppe bildet.

## Claims

1. A clutch module of the kind comprising a mechanism (11), a clutch friction wheel (12) and a flywheel (13), the said mechanism (11) itself comprising a cover plate (14) by which it is attached on the flywheel (13), a diaphragm (15) which bears on the cover plate (14), and a pressure plate (16) on which the diaphragm (15) bears, with, interposed between the pressure plate (16) and the cover plate (14), tongues (45) which couple the pressure plate (16) to the cover plate (14) for rotation with it, while allowing it some degree of axial mobility with respect to the latter, and, associated with the diaphragm (15), resilient gripping means (46) which permanently bias the diaphragm (15) towards its engagement on the cover plate (14),
characterised in that the resilient gripping means (46) are divided into at least two sectors (48), which are secured to the cover plate (14), both circumferentially and axially, at each of their circumferential ends, and each of which defines an integral tongue (45).

2. A clutch module according to Claim 1, characterised in that the sectors (48) are gripped at each of their circumferential ends between the cover plate (14) and the flywheel (13).

3. A clutch module according to Claim 2, characterised in that, with the cover plate (14) having a transverse flange portion (38) for its axial engagement on the flywheel (13), the sectors (48) have, at each of their circumferential ends and in the vicinity of their radially outermost peripheral edge, a hole (51) in which is engaged a member for centring and/or coupling in rotation, such as a boss portion (52) having a complementary profile and formed integrally with the said flange portion (38), screw (52') or rivet (52").

4. A clutch module according to any one of the preceding Claims, characterised in that, at at least one of their circumferential ends, the sectors (48) have a turned edge (58) extending along at least part of the length of their radial edges.

5. A clutch module according to any one of the preceding Claims, characterised in that, in the vicinity of their radially innermost peripheral edge, the sectors (48) have a circular edge (53) for contact with the diaphragm (15).

6. A clutch module according to any one of the preceding Claims, characterised in that, at at least one of their circumferential ends, the sectors (48) have at least one press-formed deformation (60).

7. A clutch module according to any one of the preceding Claims, characterised in that, at each of their circumferential ends, the sectors (48) have a widened portion (49) which extends generally radially, and the tongue (45) thereof is cantilevered integrally from a said widened portion (49).

8. A clutch module according to any one of the preceding Claims, characterised in that, along its radially innermost peripheral edge, at least one of the sectors (48) has a projecting tongue (61) for centring the diaphragm (15) and/or for preventing it from rotating.

9. A clutch module according to any one of the preceding Claims, characterised in that the tongue (45) defined by each of the sectors (48) extends over an arc of a circle.

10. A clutch module according to any one of the preceding Claims, characterised in that, with the pressure plate (16) having projectingbosses (62, 62') for engagement of the diaphragm (15) thereon, each of the sectors (48) defines a U-shaped enclosure around one of the said bosses (62, 62').

11. A clutch module according to any one of the preceding Claims, characterised in that it includes at least three sectors (48) spaced apart on a circle.

12. A clutch module according to any one of the preceding Claims, characterised in that, with special fastening means (52") securing the sectors (48) to the cover plate (14), the cover plate (14), the diaphragm (15) and the sectors (48) constitute a unitary sub-assembly.

13. A clutch module according to Claim 12, characterised in that, the pressure plate (16) being fixed to the tongues (45), the mechanism (11) constitutes a unitary sub-assembly.
